# EUROPÄISCHE PATENTSCHRIFT

(11) **EP 2 542 487 B1**
(45) Veröffentlichungstag und Bekanntmachung des Hinweises auf die Patenterteilung: **19.03.2014**
(21) Anmeldenummer: 11700345.9
(22) Anmeldetag: 14.01.2011
(51) Int. Cl.: B65G 15/36

(54) **KURVENGÄNGIGER FÖRDERGURT, INSBESONDERE STAHLSEILFÖRDERGURT, UND FÖRDERANLAGE HIERZU**
CURVED CONVEYOR BELT, IN PARTICULAR STEEL-CABLE CONVEYOR BELT, AND CONVEYOR SYSTEM FOR THIS
BANDE TRANSPORTEUSE COURBE, EN PARTICULIER BANDE TRANSPORTEUSE À CÂBLÉS D'ACIER, ET TRANSPORTEUR ASSOCIÉ

(30) Priorität: 01.03.2010 DE 102010000588
(43) Veröffentlichungstag der Anmeldung: 09.01.2013
(73) Patentinhaber: Phoenix Conveyor Belt Systems GmbH, 07422 Bad Blankenburg (DE)
(72) Erfinder: KÜSEL, Bernd, 21077 Hamburg (DE)
(74) Vertreter: Finger, Karsten
(86) Internationale Anmeldenummer: PCT/EP2011/050439
(87) Internationale Veröffentlichungsnummer: WO 2011/107304

(56) Entgegenhaltungen:
- DE-A1- 4 423 431
- DE-A1- 19 811 411
- DE-C1- 4 212 824
- GB-A- 991 767
- GB-A- 2 121 369

## Beschreibung

Die Erfindung betrifft einen kurvengängigen Fördergurt mit einer tragseitigen Deckplatte und einer laufseitigen Deckplatte aus jeweils einem polymeren Werkstoff mit elastischen Eigenschaften sowie einem eingebetteten Zugträger in Form von Seilen, wobei der Fördergurt über seine gesamte Breite hinweg zwei Randbereiche und einen Mittenbereich umfasst.

Ein gattungsgemäßer Fördergurt wird insbesondere in GB 991 767 detailliert beschrieben.

Die folgenden Druckschriften offenbaren andere Beispiele für Fördergurt:
DE 25 20 943 A1
DE 25 32 190 A1
DE 38 01 120 A1
DE 43 33 839 A1
DE 44 36 042 A1
EP 0 336 385 A1
EP 0 753 471 A1
WO 2008/034483 A1

Die tragseitige Deckplatte und laufseitige Deckplatte bestehen zumeist aus einer vulkanisierbaren Kautschukmischung, enthaltend eine Kautschukkomponente oder einen Kautschukkomponentenverschnitt, ein Vernetzungsmittel oder ein Vernetzungssystem, umfassend ein Vernetzungsmittel und einen Beschleuniger, sowie zumeist weitere Mischungsingredienzien, insbesondere einen Füllstoff und/oder ein Verarbeitungshilfsmittel und/oder ein Alterungsschutzmittel und/oder einen Weichmacher und/oder sonstige Zusatzstoff (z.B. Fasern, Farbpigmente). Die diesbezügliche Kautschukbasis ist insbesondere:
Naturkautschuk (NR)
Butadien-Kautschuk (BR)
Chloropren-Kautschuk (CR)
Styrol-Butadien-Kautschuk (SBR)
Nitrilkautschuk (NBR)
SBR/BR-Verschnitt
NR/BR-Verschnitt

Von besonderer Bedeutung ist bislang CR, das sich durch eine hohe Flamm-, Witterungs- und Alterungsbeständigkeit auszeichnet, insbesondere für Fördergurte mit Einsatz im Untertagebergbau.

Als Zugträger kommen in Fördergurtlängsrichtung verlaufende Seile aus Stahl oder Aramid zum Einsatz, wobei Seile aus Stahl von besonderer Bedeutung sind.

Im Folgenden wird nun die Problematik bei kurvengängigen Förderanlagen unter Einsatz von Stahlseilfördergurten näher erläutert.

Bei Langstrecken-Förderanlagen von etwa einem Kilometer Länge und mehr ist der Einsatz von Fördergurten mit einem Zugträger aus Stahlseilen bei fast allen Fällen unumgänglich. Stahlseile haben den Vorteil einer geringen Dehnung, so dass beispielsweise kurze Spannwege mit relativ kleinen Spannstationen möglich sind.

In vielen Fällen ist es zudem wünschenswert, diese Langstrecken-Förderanlagen in möglichst engen horizontalen Kurven zu führen, um beispielsweise eine Geländeerhebung zu umgehen. Diesem Wunsch steht jedoch die geringe Dehnung der Zugträgerstahlseile entgegen.

In geringem Maße kann durch eine Neigung der Tragrollen eine Kurvengängigkeit erreicht werden. Je enger die Kurven, desto höher ist die Zugbeanspruchung im außen liegenden Bereich des Fördergurtes, was zur Überdehnung oder gar zum Reißen der Randseile führen kann. Ferner ist der Querschnitt des transportierten Materials durch die Schrägstellung in den Kurven in der Regel kleiner, verbunden mit entsprechend geringer Förderleistung der gesamten Anlage.

Zwecks Beseitigung des oben genannten Problemkreises zeichnet sich der neue Fördergurt dadurch aus, dass wenigstens innerhalb der beiden Randbereiche des Fördergurtes in Fördergurtquerrichtung verlaufende dehnungsfähige Einzelcorde, die aus Polyamid bestehen, im Fördergurt eingebettet sind.

Der Mittenbereich des Fördergurtes mit dem Zugträger aus Seilen erfasst insbesondere 50 bis 80 % der Gurtbreite, beispielsweise unter folgenden Verhältnissen:

| | |
|---|---|
| beide Randbereiche: | jeweils 20 % |
| Mittenbereich: | 60 % |

Vorteilhafterweise erfassen die Einzelcorde die beiden Randbereiche und den Mittenbereich des Fördergurtes. Die Einzelcorde sind dabei innerhalb der tragseitigen Deckplatte und/oder laufseitigen Deckplatte angeordnet. Randbereiche aus Vollgummi wären zu empfindlich für äußere Beschädigungen.

Hinsichtlich der dehnungsfähigen Einzelcorde als Quercorde kommen folgende Varianten zum Einsatz:

### - Cordgewebe

Das Cordgewebe umfasst in Fördergurtquerrichtung verlaufende Corde und in Fördergurtlängsrichtung verlaufende Hilfsfäden. Die Quercorde bestehen aus Polyamid. Die Hilfsfäden können beispielsweise aus Polyester oder Polyamid gebildet sein. Vorzugsweise bestehen die Hilfsfäden aus einem Werkstoff, der unter Vulkanisationsbedingungen (130 bis 180 °C) zerstört wird, beispielsweise durch Schmelzen oder Zersetzung, so dass dann letztlich die Quercorde als Einzelcorde wirken. Hinsichtlich diesbezüglicher Details wird insbesondere auf die Offenlegungsschrift WO 2008/0344483 A1 verwiesen.

### - Einzelcorde

Der Einsatz von Einzelcorden, die aus Polyamid bestehen, ist bevorzugt. Einzelcorde haben gegenüber einem Gewebe, insbesondere gegenüber einem Vollgewebe, den Vorteil, da sich diese außen in der Kurve spreizen können. Diese Einzelcorde als Quercorde werden in Verbindung mit der Figurenbeschreibung noch näher vorgestellt.

Bei Einsatz eines Polyamids kommen insbesondere folgende Polyamidtypen zur Anwendung:
Polyamid 6
Polyamid 6.6
Polyamid 11
Polyamid 12
Polyamid 6.10
Polyamid 6.12
Copolymer

Eine weitere Aufgabe der Erfindung besteht darin, zwecks Beseitigung des eingangs genannten Problemkreises eine Förderanlage bereitzustellen, die wenigstens aus einem gattungsgemäßen Fördergurt sowie einer Antriebstrommel und Umkehrtrommel sowie aus Tragrollen und einem Traggerüst besteht.

Diese Aufgabe wird durch eine Förderanlage nach Anspruch 7 gelöst.

Hinsichtlich Details des Zugträgers und der Einzelcorde wird auf das bereits Erwähnte verwiesen.

Die Erfindung wird nun anhand von Ausführungsbeispielen unter Bezugnahme auf schematische Zeichnungen erläutert. Es zeigen:
- Fig. 1: einen Stahlseilfördergurt mit Quercorden innerhalb der tragseitigen und laufseitigen Deckplatte;
- Fig. 2: einen Stahlseilfördergurt mit Quercorden ausschließlich innerhalb der tragseitigen Deckplatte;
- Fig. 3: einen Stahlseilfördergurt mit Quercorden ausschließlich innerhalb der laufseitigen Deckplatte;
- Fig. 4: eine kurvengängige Förderanlage mit Rechtskurvenverlauf;
- Fig. 5: eine Fördergurtwendevorrichtung.

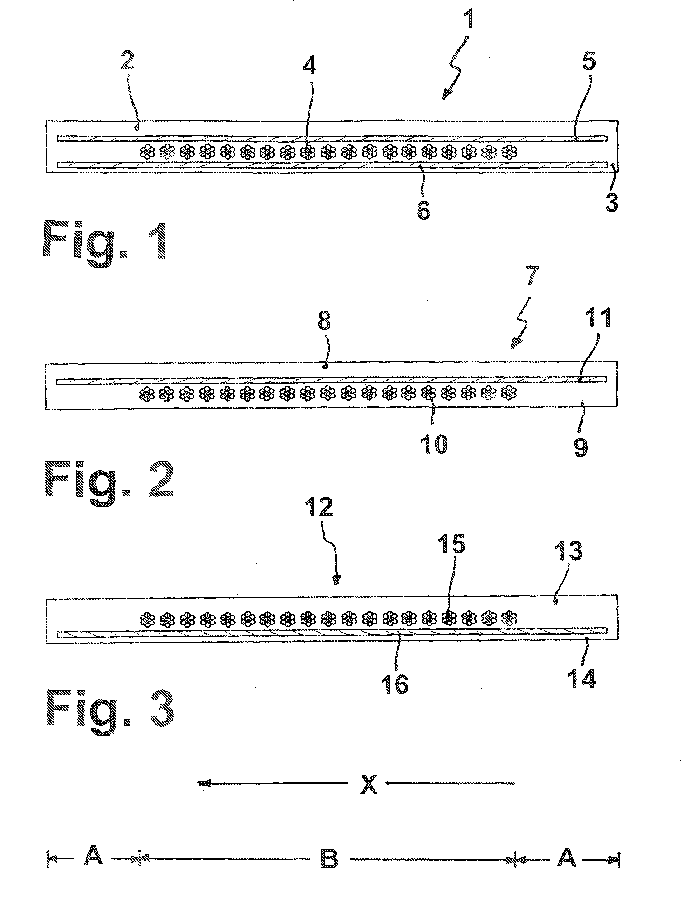

Fig. 1 zeigt einen Fördergurt 1 mit einer tragseitigen Deckplatte 2 und einer laufseitigen Deckpatte 3 aus jeweils einem polymeren Werkstoff mit elastischen Eigenschaften, beispielsweise aus einer vulkanisierten Kautschukmischung auf der Basis von CR. In den Fördergurt ist ein Zugträger 4 in Form von Stahlseilen eingebettet, die ausschließlich innerhalb des Mittenbereiches B des Fördergurtes angeordnet sind. In der tragseitigen und laufseitigen Deckplatte sind jeweils in Fördergurtquerrichtung X verlaufende Quercorde 5 und 6 aus einem dehnungsfähigen textilen Werkstoff eingebettet. Über die gesamte Fördergurtlängsrichtung hinweg sind diese in einem Abstand zueinander als eine Vielzahl von Einzelcorden aus einem dehnungsfähigen textilen Werkstoff, gebildet aus Polyamid, vorhanden. Diese Quercorde 5 und 6 erstrecken sich im Wesentlichen über die gesamte Fördergurtbreite, umfassend die beiden Randbereiche A und den Mittenbereich B. Diese Quercorde erfüllen im Zusammenhang mit den ausschließlich im Mittenbereich B angeordneten Stahlseilen die Anforderung an die Kurvengängigkeit. Darüber hinaus dienen diese Quercorde auch dem Schlitzschutz.

Fig. 2 zeigt einen Fördergurt 7 mit einer tragseitigen Deckplatte 8 und einer laufseitigen Deckplatte 9 sowie einem eingebetteten Zugträger 10 aus Stahlseilen. Der Zugträger ist dabei auch hier ausschließlich innerhalb des Mittenbereiches B des Fördergurtes angeordnet. In der tragseitigen Deckplatte ist ein in Fördergurtquerrichtung X verlaufender Quercord 11 als Einzelcord eingebettet, der dabei im Wesentlichen die gesamte Fördergurtbreite einnimmt.

Fig. 3 zeigt einen Fördergurt 12 mit einer tragseitigen Deckplatte 13 und einer laufseitigen Deckplatte 14 sowie einem eingebetteten Zugträger 15 aus Stahlseilen. Der Zugträger ist auch hier ausschließlich innerhalb des Mittenbereiches B des Fördergurtes angeordnet. In der laufseitigen Deckplatte ist ein in Fördergurtquerrichtung X verlaufender Quercord 16 als Einzelcord eingebettet, der im Wesentlichen die gesamte Fördergurtbreite umfasst.

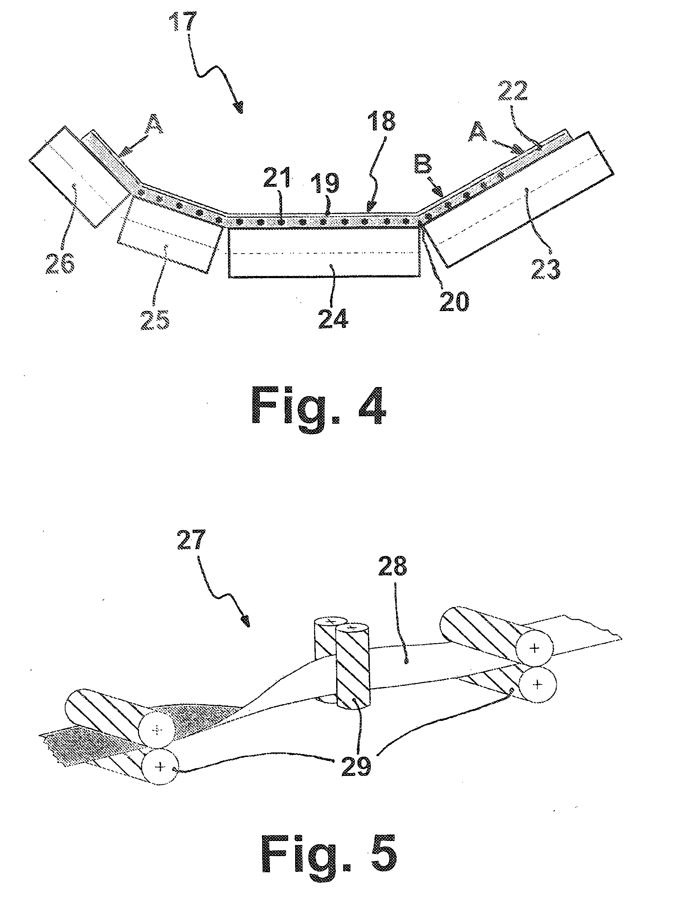

Der Gurtaufbau gemäß der Fig. 1 bis 3 ist deshalb vorteilhaft, da hiermit kürzere Übergangslängen von der flachen in die gemuldete Form (Fig. 4) ermöglicht werden.

Fig. 4 zeigt eine Förderanlage 17 mit einem Fördergurt 18, der eine tragseitige Deckplatte 19 und eine laufseitige Deckplatte 20 sowie einen eingebetteten Zugträger 21 aus Stahlseilen umfasst. Innerhalb der tragseitigen Deckplatte für das Fördermaterial ist ferner ein Quercord 22 als Einzelcord eingebettet. Der Fördergurt entspricht der Ausführung gemäß Fig. 2.

Die laufseitige Deckplatte 20 stützt sich unter Muldung des Fördergurtes 18 an den Tragrollen 23, 24, 25 und 26 ab. Dargestellt wird hier die Anlagenkonstellation bei einer Rechtskurve. Hinsichtlich der einzelnen Tragrollen bleibt folgendes festzuhalten:
- Eine besondere Bedeutung hat die verlängerte gewinkelt angeordnete Tragrolle 23. Dabei ist der rechte Randbereich A des Fördergurtes 18 derart angehoben, dass auch der rechte Teil des Mittenbereiches B, wo der Zugträger 21 angeordnet ist, mit angehoben wird. Auf diese Weise wird dem Fördermaterial ausreichend Halt gegeben.
- Die horizontale Tragrolle 24 trägt die Hauptlast des Mittenbereiches B des Fördergurtes 18.
- Die gewinkelt angeordnete Tragrolle 25 trägt eine kleinere Last des Mittenbereiches B des Fördergurtes 18.
- Die ebenfalls gewinkelt angeordnete Tragrolle 26 trägt ausschließlich den linken Randbereich A des Fördergurtes 18.

Bei einer Linkskurve liegen die umgekehrten Tragrollenkonstellationen vor.

Fig. 5 zeigt nun eine Fördergurtwendevorrichtung 27 für den Fördergurt 28 innerhalb einer Zone des materialfreien Bereiches, umfassend ein System 29 von Wenderollen. Eine derartige Fördergurtwendevorrichtung wird oft bei Langstrecken eingesetzt. Mittels des erfindungsgemäßen Fördergurtes können derartige Gurtwendungen kürzer ausgelegt werden.

### Bezugszeichenliste

### (Teil der Beschreibung)

- 1: Fördergurt
- 2: tragseitige Deckplatte
- 3: laufseitige Deckplatte
- 4: Zugträger
- 5: Einzelcord (Quercord)
- 6: Einzelcord (Quercord)
- 7: Fördergurt
- 8: tragseitige Deckplatte
- 9: laufseitige Deckplatte
- 10: Zugträger
- 11: Einzelcord (Quercord)
- 12: Fördergurt
- 13: tragseitige Deckplatte
- 14: laufseitige Deckplatte
- 15: Zugträger
- 16: Einzelcord (Quercord)
- 17: Förderanlage
- 18: Fördergurt
- 19: tragseitige Deckplatte
- 20: laufseitige Deckplatte
- 21: Zugträger
- 22: Einzelcord (Quercord)
- 23: Tragrolle
- 24: Tragrolle
- 25: Tragrolle
- 26: Tragrolle
- 27: Fördergurtwendevorrichtung
- 28: Fördergurt
- 29: System von Wenderollen
- A: Randbereich des Fördergurtes
- B: Mittenbereich des Fördergurtes
- X: Fördergurtquerrichtung

## Patentansprüche

1. Kurvengängiger Fördergurt (1, 7, 12, 18, 28) mit einer tragseitigen Deckplatte (2, 8, 13, 19) und einer laufseitigen Deckplatte (3, 9, 14, 20) aus jeweils einem polymeren Werkstoff mit elastischen Eigenschaften sowie einem eingebetteten Zugträger (4, 10, 15, 21) in Form von Seilen, wobei der Fördergurt über seine gesamte Breite hinweg zwei Randbereiche (A) und einen Mittenbereich (B) umfasst, wobei der Zugträger (4, 10, 15, 21) ausschließlich innerhalb des Mittenbereiches (B) des Fördergurtes (1, 7, 12, 18, 28) angeordnet ist und wobei wenigstens innerhalb der beiden Randbereiche (A) des Fördergurtes (1, 7, 12, 18, 28) ein textiler Werkstoff im Fördergurt eingebettet ist, wobei es sich bei dem textilen Werkstoff um in Fördergurtquerrichtung (X) verlaufende dehnungsfähige Einzelcorde (5, 6, 11, 16, 22) handelt, **dadurch gekennzeichnet, dass** die Einzelcorde aus Polyamid bestehen.

2. Fördergurt nach einem der Ansprüche 1 oder 2, **dadurch gekennzeichnet, dass** der Zugträger (4, 10, 15, 21) aus Stahlseilen oder Aramidseilen besteht.

3. Fördergurt nach Anspruch 1 oder 2, **dadurch gekennzeichnet, dass** die Einzelcorde (5, 6, 11, 16, 22) Bestandteile eines Cordgewebes sind, das in Förderquerrichtung (X) verlaufende Corde und in Fördergurtlängsrichtung verlaufende Hilfsfäden umfasst, wobei die Hilfsfäden aus einem Werkstoff bestehen, der bei 130°C bis 180°C zerstört wird.

4. Fördergurt nach einem der Ansprüche 1 bis 3, **dadurch gekennzeichnet, dass** das die Einzelcorde (5, 6, 11, 16, 22) innerhalb der tragseitigen Deckplatte (2, 8, 13, 19) und/oder der laufseitigen Deckplatte (3, 9, 14, 20) angeordnet sind.

5. Fördergurt nach Anspruch 4, **dadurch gekennzeichnet, dass** das die Einzelcorde (5, 6, 11, 16, 22) die beiden Randbereich (A) und den Mittenbereich (B) des Fördergurtes (1, 7, 12, 18, 28) erfassen.

6. Fördergurt nach einem der Ansprüche 1 bis 5, **dadurch gekennzeichnet, dass** der Mittenbereich (B) des Fördergurtes mit dem Zugträger (4, 10, 15, 21) aus Seilen 50 bis 80 % der Gurtbreite erfasst.

7. Kurvengängige Förderanlage (17), bestehend wenigstens aus: einem Fördergurt (1, 7, 12, 18, 28) gemäß einem der Ansprüche 1 bis 6; sowie einer Antriebstrommel und Umkehrtrommel sowie aus Tragrollen (23, 24, 25, 26) und einem Traggerüst;
wobei Tragrollen (23, 24, 25, 26) vorhanden sind, die im Randbereich (A) und Mittenbereich (B) des Fördergurtes wirken und dabei derart gestaltet sind, dass der Randbereich (A) des Fördergurtes (1, 7, 12, 18, 28) angehoben werden kann.

## Claims

1. Conveyor belt (1, 7, 12, 18, 28) having a carrying-side cover plate (2, 8, 13, 19) and a running-side cover plate (3, 9, 14, 20), each of a polymer material having elastic properties, and an embedded tensile load-bearing element (4, 10, 15, 21) in the form of cables, the conveyor belt over its entire width comprising two peripheral regions (A) and a central region (B), the tensile load-bearing element (4, 10, 15, 21) being exclusively located within the central region (B) of the conveyor belt (1, 7, 12, 18, 28), and a textile material being embedded in the conveyor belt at least within the two peripheral regions (A) of the conveyor belt (1, 7, 12, 18, 28), the textile material being unitary stretchable cords (5, 6, 11, 16, 22) which run in the transverse direction of the conveyor belt (X), **characterized in that** the unitary cords are composed of polyamide.

2. Conveyor belt according to Claim 1, **characterized in that** the tensile load-bearing element (4, 10, 15, 21) is composed of steel cables or aramid cables.

3. Conveyor belt according to Claim 1 or 2, **characterized in that** the unitary cords (5, 6, 11, 16, 22) are components of a cord fabric comprising cords, which run in the transverse direction of the conveyor belt (X), and auxiliary threads, which run in the longitudinal direction of the conveyor belt, the auxiliary threads being composed of a material which is destroyed at 130°C to 180°C.

4. Conveyor belt according one of Claims 1 to 3, **characterized in that** the unitary cords (5, 6, 11, 16, 22) are located within the carrying-side cover plate (2, 8, 13, 19) and/or the running-side cover plate (3, 9, 14, 20).

5. Conveyor belt according to Claim 4, **characterized in that** the unitary cords (5, 6, 11, 16, 22) encompass the two peripheral regions (A) and the central region (B) of the conveyor belt (1, 7, 12, 18, 28).

6. Conveyor belt according to one of Claims 1 to 5, **characterized in that** the central region (B), having the tensile load-bearing element (4, 10, 15, 21) made up of cables, of the conveyor belt encompasses 50 to 80% of the belt width.

7. Conveyor system (17) capable of negotiating curves, consisting of at least:
one conveyor belt (1, 7, 12, 18, 28) according to one of Claims 1 to 6; and
one driving drum and reversing drum, and of carrying rollers (23, 24, 25, 26) and a carrying frame;
comprising carrying rollers (23, 24, 25, 26) which act in the peripheral region (A) and central region (B) of the conveyor belt and are configured here such that the peripheral region (A) of the conveyor belt (1, 7, 12, 18, 28) can be raised.

## Revendications

1. Bande transporteuse courbe (1, 7, 12, 18, 28) comprenant une plaque de recouvrement côté porteur (2, 8, 13, 19) et une plaque de recouvrement côté roulement (3, 9, 14, 20), constituées chacune d'un matériau polymère ayant des propriétés élastiques et comprenant un support de traction encastré (4, 10, 15, 21) sous forme de câbles, la bande transporteuse comprenant, sur toute sa largeur, deux régions de bord (A) et une région centrale (B), le support de traction (4, 10, 15, 21) étant disposé exclusivement à l'intérieur de la région centrale (B) de la bande transporteuse (1, 7, 12, 18, 28) et au moins à l'intérieur des deux régions de bord (A) de la bande transporteuse (1, 7, 12, 18, 28), un matériau textile étant encastré dans la bande transporteuse, le matériau textile étant un fil câblé individuel extensible (5, 6, 11, 16, 22) s'étendant dans la direction transversale de la bande transporteuse (X), **caractérisée en ce que** les fils câblés individuels se composent de polyamide.

2. Bande transporteuse selon la revendication 1, **caractérisée en ce que** le support de traction (4, 10, 15, 21) se compose de câbles d'acier ou de câbles d'aramide.

3. Bande transporteuse selon la revendication 1 ou 2, **caractérisée en ce que** les fils câblés individuels (5, 6, 11, 16, 22) font partie d'un tissu de fils câblés qui comprend des fils câblés s'étendant dans la direction transversale de la bande transporteuse (X) et des fils auxiliaires s'étendant dans la direction longitudinale de la bande transporteuse, les fils auxiliaires se composant d'un matériau qui est détruit à des températures de 130 °C à 180 °C.

4. Bande transporteuse selon l'une quelconque des revendications 1 à 3, **caractérisée en ce que** les fils câblés individuels (5, 6, 11, 16, 22) sont disposés à l'intérieur de la plaque de recouvrement côté porteur (2, 8, 13, 19) et/ou de la plaque de recouvrement côté roulement (3, 9, 14, 20).

5. Bande transporteuse selon la revendication 4, **caractérisée en ce que** les fils câblés individuels (5, 6, 11, 16, 22) couvrent les deux régions de bord (A) et la région centrale (B) de la bande transporteuse (1, 7, 12, 18, 28).

6. Bande transporteuse selon l'une quelconque des revendications 1 à 5, **caractérisée en ce que** la région centrale (B) de la bande transporteuse avec le support de traction (4, 10, 15, 21) constitué de câbles couvre 50 à 80 % de la largeur de la bande.

7. Installation de transport courbe (17) constituée au moins des éléments suivants :
une bande transporteuse (1, 7, 12, 18, 28) selon l'une quelconque des revendications 1 à 6 ; ainsi qu'un tambour d'entraînement et un tambour d'inversion et des rouleaux porteurs (23, 24, 25, 26) et un châssis porteur ;
des rouleaux porteurs (23, 24, 25, 26) étant prévus, lesquels agissent dans la région de bord (A) et dans la région centrale (B) de la bande transporteuse et sont configurés en l'occurrence de telle sorte que la région de bord (A) de la bande transporteuse (1, 7, 12, 18, 28) puisse être soulevée.
